# FASCICULE DE BREVET EUROPEEN

(11) **EP 0 894 999 B1**
(45) Date de publication et mention de la délivrance du brevet: **18.12.2002**
(21) Numéro de dépôt: 98401898.6
(22) Date de dépôt: 24.07.1998
(51) Int. Cl.: F16F 13/14

(54) **Support antivibratoire hydraulique**
Schwingungsdämpfendes Lager
Hydraulic damping support

(30) Priorité: 01.08.1997 FR 9709878
(43) Date de publication de la demande: 03.02.1999
(73) Titulaire: HUTCHINSON, 75008 Paris (FR)
(72) Inventeur: Bellamy, Alain, 41100 Naveil (FR); Reh, Denis, 28200 Thiville (FR)
(74) Mandataire: Burbaud, Eric

(56) Documents cités:
- EP-A- 0 646 735
- EP-A- 0 709 594
- DE-A- 3 909 852
- PATENT ABSTRACTS OF JAPAN vol. 018, no. 628 (M-1713), 30 novembre 1994 & JP 06 241269 A (TOYODA GOSEI CO LTD), 30 août 1994

## Description

La présente invention est relative aux supports antivibratoires hydrauliques.

L'invention concerne un support antivibratoire hydraulique selon le préambule de la revendication 1.

Les documents EP-A-0 646 735 et EP 0 709 594 décrivent un exemple de support antivibratoire hydraulique du type visé ci-dessus, dans lequel les bords libres de la base du corps en élastomère sont formés par deux pattes de la plaque ajourée qui sont recouvertes d'élastomère et qui sont interposées entre les zones de fixation du capot et la platine.

De ce fait, au fur et à mesure de l'utilisation de ces supports antivibratoires, les couches d'élastomère qui recouvrent lesdites pattes de la plaque ajourée peuvent fluer sous l'effet des efforts répétés subis par le capot, ce qui peut conduire à des défauts d'étanchéité.

La présente invention a notamment pour but de pallier à cet inconvénient.

A cet effet, selon l'invention, un support antivibratoire hydraulique du genre en question est caractérisé en ce que les zones de fixation du capot sont disposées radialement à l'extérieur des bords libres de la plaque ajourée et de la base du corps en élastomère, ces zones de fixation étant en contact direct avec la face de support de la platine, et lesdites zones de fixation se prolongeant vers le corps en élastomère par des zones d'appui qui s'appliquent parallèlement au premier axe contre les bords libres de la plaque ajourée et de la base du corps en élastomère en plaquant ainsi ces bords libres contre la platine.

Grâce à ces dispositions, les efforts dynamiques subis par le capot sont repris directement par la zone de contact direct entre ledit capot et la platine, sans écrasement des bords libres de la base du corps en élastomère : on supprime ainsi les effets de fluage susmentionnés, et l'on garantit une étanchéité durable du support antivibratoire.

De plus; l'effort statique de serrage appliqué aux bords libres de la base du corps en élastomère est entièrement défini par la géométrie des pièces constituant le support antivibratoire, de sorte que cet effort est parfaitement maîtrisé. On évite ainsi des défauts d'étanchéité qui pourraient autrement être dus soit à un serrage insuffisant desdits bords libres, soit à une détérioration de ces bords libres par serrage excessif.

Enfin, l'invention permet aussi de réduire la surface de contact entre le capot et les bords libres de la base du corps en élastomère, ce qui permet d'obtenir localement une pression de contact suffisamment élevée le long desdits bords libres sans avoir à exercer une force de serrage excessive du capot sur la platine : le montage du support antivibratoire selon l'invention est donc facilité.

Dans des modes de réalisation préférés de l'invention, on peut éventuellement avoir recours en outre à l'une et/ou à l'autre des dispositions suivantes :
- les zones de fixation du capot sont solidarisées avec la platine par sertissage ;
- les zones de fixation du capot et la platine sont traversées par des trous de fixation disposés en correspondance, pour permettre la fixation de la platine et du capot sur l'un des deux éléments rigides à réunir ;
- la plaque ajourée présente des pattes qui sont serties sur le bord de la platine au niveau des bords de fixation de la base du corps en élastomère ;
- la base du corps en élastomère présente uniquement deux bords de fixation séparés l'un de l'autre par uniquement deux bords libres ;
- le capot présente une forme générale en Ω ouvert selon un deuxième axe perpendiculaire audit premier axe, avec deux ailes de fixation formant lesdites zones de fixation, et la première armature se présente sous la forme d'un organe rigide allongé s'étendant longitudinalement selon ledit deuxième axe ;
- le corps en élastomère comporte en outre une paroi mince librement deformable qui délimite la deuxième chambre hydraulique avec la face de support de la platine, le canal étranglé étant lui-même délimité entre la base du corps en élastomère et ladite face de support de la platine.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue de dessus d'un support antivibratoire hydraulique selon une forme de réalisation de l'invention,
- la figure 2 est une vue en coupe selon la ligne II-II de la figure 1,
- la figure 3 est une vue en coupe selon la ligne III-III de la figure 2,
- et la figure 4 est une vue de détail de la figure 2.

Sur les différentes figures, les mêmes références désignent des éléments identiques ou similaires.

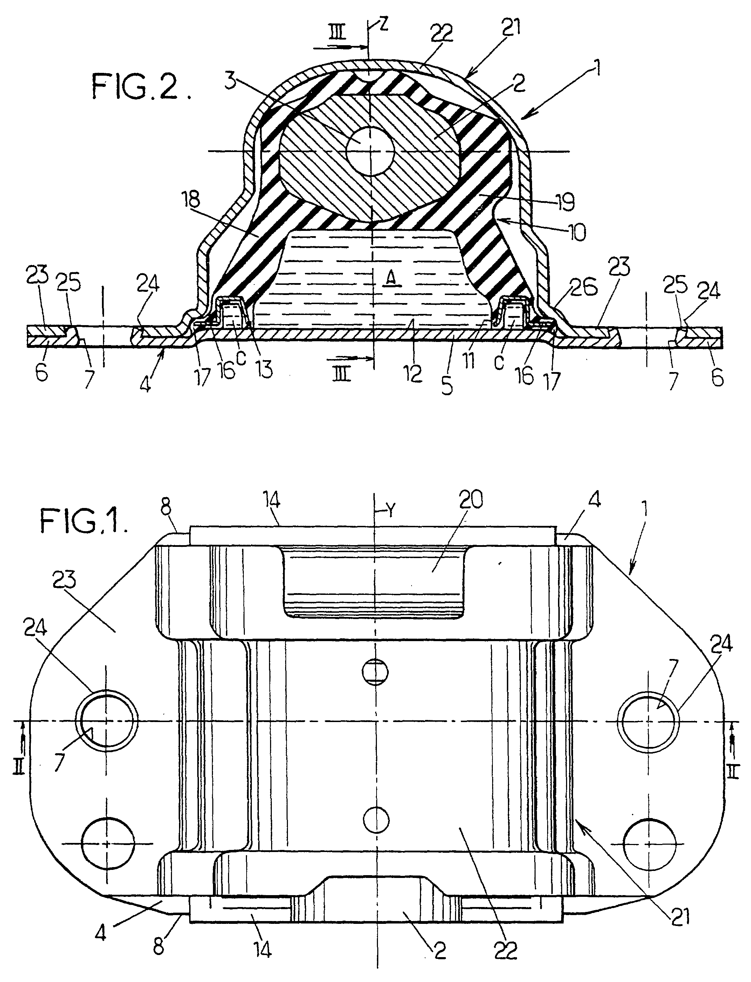

Le support antivibratoire hydraulique 1 représenté sur les figures 1 à 3 est destiné à être interposé entre deux éléments rigides tels qu'un châssis et un groupe motopropulseur de véhicule, pour supporter le groupe motopropulseur et pour amortir et filtrer des vibrations entre ces deux éléments, essentiellement selon un axe vertical Z.

Ce support antivibratoire comporte tout d'abord une première armature rigide 2 qui se présente sous la forme d'un organe métallique allongé s'étendant selon un axe Y perpendiculaire à l'axe Z et qui est percé d'un trou central 3 permettant sa fixation par exemple au groupe motopropulseur du véhicule.

Cette première armature 2 est disposée au-dessus d'une deuxième armature rigide 4, qui se présente sous la forme d'une platine métallique de forme générale sensiblement plane, s'étendant perpendiculairement à l'axe Z, c'est-à-dire horizontalement.

Cette platine 4 présente une partie centrale emboutie 5 de forme plane, qui est légèrement surélevée par rapport à deux ailes de fixation 6 encadrant ladite partie centrale.

Chacune de ces ailes 6 est pourvue d'au moins un trou de fixation 7 destiné à fixer la platine 4 au châssis du véhicule.

Bien entendu, la platine 4 pourrait être fixée au bloc motopropulseur et l'armature 2 au châssis, auquel cas l'armature 2 serait située sous la platine 4, la disposition de l'ensemble du support antivibratoire étant alors inversée par rapport à la disposition représentée sur les dessins.

Par ailleurs, la platine 4 présente deux bords latéraux 8 qui s'étendent chacun entre les deux ailes de fixation 6 et qui forment respectivement des rebords ou lisières 9 en décrochement vers le bas par rapport à la partie centrale 5.

De plus, la platine 4 est reliée à l'armature 2 par un corps en élastomère 10 qui est moulé d'une seule pièce et qui présente une base 11 appliquée de façon étanche sur la face supérieure 12 ou face de support de la platine 4, par simple serrage axial parallèlement à l'axe Z.

Ce serrage axial est obtenu par sertissage d'une plaque métallique rigide 13, ajourée et emboutie, qui est généralement réalisée en acier et qui est noyée dans la base 11 du corps en élastomère.

Plus particulièrement, cette plaque ajourée 13 présente deux pattes latérales 14 qui font saillie vers l'extérieur le long des rebords 9 à partir de deux bords opposés 15 de la base du corps en élastomère, et qui sont serties sur lesdits rebords 9.

Par ailleurs, les pattes 14 de la plaque ajourée 13 sont séparées l'une de l'autre par deux bords opposés 16 de ladite plaque, qui forment la périphérie de cette plaque ajourée avec les pattes 14 et qui constituent chacun une lisière plane parallèle au plan de la platine 4.

Ces deux bords libres 16 sont noyés dans la base 11 du corps en élastomère, qui forme ainsi également deux bords libres 17 en correspondance avec les bords 16, lesdits bords libres 16,17 étant simplement en appui axial contre la face supérieure 12 de la platine, sans sertissage.

Le corps en élastomère 10 comporte par ailleurs une paroi épaisse 18 en forme de cloche qui présente une résistance en compression suffisante pour servir de support au bloc motopropulseur. Cette paroi 18 s'étend en s'évasant vers le bas, depuis un sommet 19 adhérisé sur l'armature 2 jusqu'à la base 11 du corps en élastomère, en délimitant avec la face supérieure 12 de la platine une chambre de travail A remplie de liquide.

De plus, le corps en élastomère 10 forme en outre une membrane souple 20 également en forme de cloche, qui est librement déformable et qui délimite avec la face supérieure 12 de la platine une chambre de compensation B également remplie de liquide.

Les deux chambres A,B sont ainsi juxtaposées de façon non concentrique sur la face supérieure 12 de la platine, ces deux chambres pouvant être par exemple sensiblement alignées selon l'axe Y.

De plus, les deux chambres A,B communiquent ensemble par l'intermédiaire d'un canal étranglé C qui est délimité entre, d'une part, la face supérieure 12 de la platine, et d'autre part, une gorge ménagée dans la base 11 du corps en élastomère, la forme de cette gorge étant de préférence définie par des emboutis de la plaque ajourée 13.

Ce canal étranglé C permet ainsi des transferts de liquide entre les chambres A et B, afin d'amortir des vibrations entre l'armature 2 et la platine 4, essentiellement selon l'axe Z.

Enfin, pour limiter les débattements relatifs de l'armature 2 par rapport à la platine 4, le support antivibratoire comporte en outre un capot métallique rigide 21, qui est profilé sensiblement en forme de Ω et qui présente deux faces axiales ouvertes parallèlement à l'axe Y.

Ce capot 21 présente une partie centrale 22 qui peut coopérer par butée avec des bossages du corps en élastomère et qui est encadrée par deux ailes 23 horizontales qui reposent sur les ailes de fixation 6 de la platine.

Ces ailes 23 présentent respectivement des trous de fixation 24 en correspondance avec les trous de fixation 7 des ailes 6, de façon que la platine 4 et le capot 21 puissent être fixés ensemble par vissage sur le châssis du véhicule.

De plus, les ailes 23 et 6 sont avantageusement fixées l'une à l'autre par sertissage.

Par exemple, ce sertissage peut être réalisé en évasant des portions 25 de la platine 4 à l'intérieur des trous 24 des ailes du capot, lesquels trous ont dans ce cas une forme tronconique évasée vers le haut.

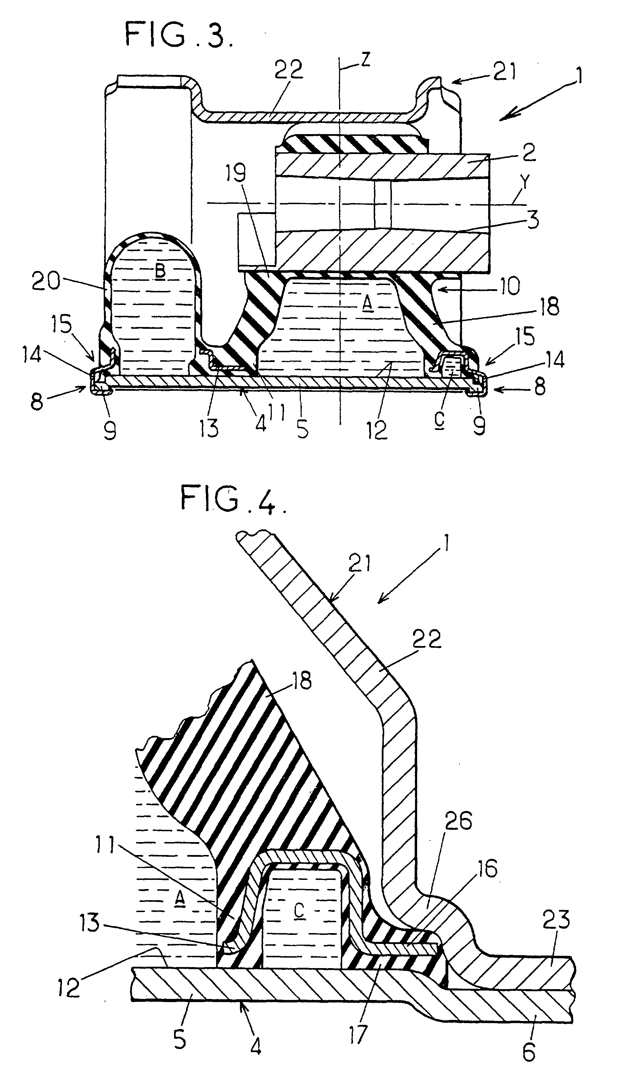

Enfin, comme on peut le voir plus en détail sur la figure 4, entre sa partie centrale 22 et chacune de ses ailes 23, le capot comporte en outre un ressaut 26 formant une zone d'appui qui s'applique parallèlement à l'axe Z contre les bords libres 16, 17 de la plaque ajourée et de la base du corps en élastomère, en plaquant ainsi ces bords libres contre la face supérieure 12 de la platine.

On garantit ainsi un serrage calibré des bords libres 16,17 sur la platine 4, en évitant toute fuite de liquide entre ladite platine et la base du corps en élastomère au niveau desdits bords libres 16,17.

## Revendications

1. Support antivibratoire hydraulique, destiné à être interposé entre deux éléments rigides pour amortir des vibrations entre ces deux éléments essentiellement selon un premier axe (Z), ce support comportant :
- des première et deuxième armatures rigides (2,4), solidarisables respectivement avec les deux éléments rigides à réunir, la deuxième armature (4) étant constituée par une platine qui s'étend perpendiculairement au premier axe (Z) et qui présente une face dite de support (12), orientée vers la première armature,
- un corps en élastomère (10) qui relie la première armature (2) à la platine (4) et qui présente une base (11) appliquée en contact étanche contre la face de support (12) de la platine par simple serrage parallèlement au premier axe (Z), ce serrage axial étant obtenu au moyen d'une plaque ajourée rigide (13) qui est noyée dans la base (11) du corps en élastomère et qui est solidarisée avec la platine (4) par sertissage, la base (11) du corps en élastomère présentant à sa périphérie, d'une part, au moins deux bords opposés (15), dits bords de fixation, le long desquels est réalisé ledit sertissage, et d'autre part, au moins deux bords libres (17) qui séparent les bords de fixation (15), la plaque ajourée (13) présentant elle-même des bords libres (16) qui sont noyés dans les bords libres (17) de la base du corps en élastomère et qui sont simplement , par l'intermédiaire des bords libres (17), en appui axial contre la face de support (12) de la platine, le corps en élastomère comportant en outre une paroi épaisse (18) en forme de cloche qui s'étend selon le premier axe (Z) en s'évasant depuis un sommet (19) solidaire de la première armature jusqu'à la base (11) dudit corps en élastomère et qui délimite avec la face de support (12) de la platine au moins une première chambre hydraulique (A) remplie de liquide,
- une deuxième chambre hydraulique (B) déformable qui est également remplie de liquide,
- un canal étranglé (C) rempli de liquide, qui relie entre elles les première et deuxième chambres hydrauliques (A,B),
- et un capot rigide (21) qui recouvre au moins partiellement la paroi épaisse (18) du corps en élastomère de façon à limiter les débattements de la première armature (2) par rapport à la platine (4), ce capot présentant des zones de fixation (23) qui s'étendent parallèlement à la platine (4) et qui sont solidarisées avec cette platine au voisinage des bords libres (17) de la base du corps en élastomère., lesdits bords libres (16,17) de la plaque ajourée et de la base de ce corps en élastomère étant serrés axialement entre la face de support (12) de la platine et ledit capot (21),
**caractérisé en ce que** les zones de fixation (23) du capot sont disposées radialement à l'extérieur des bords libres (16,17) de la plaque ajourée et de la base du corps en élastomère, ces zones de fixation étant en contact direct avec la face de support (12) de la platine, et lesdites zones de fixation se prolongeant vers le corps en élastomère (10) par des zones d'appui (26) qui s'appliquent parallèlement au premier axe (Z) contre les bords libres (16,17) de la plaque ajourée et de la base du corps en élastomère en plaquant ainsi ces bords libres contre la platine (4).

2. Support antivibratoire hydraulique selon la revendication 1, dans lequel les zones de fixation (23) du capot sont solidarisées avec la platine (4) par sertissage.

3. Support antivibratoire hydraulique selon la revendication 1 ou la revendication 2, dans lequel les zones de fixation (23) du capot et la platine (4) sont traversées par des trous de fixation (7,24) disposés en correspondance, pour permettre la fixation de la platine (4) et du capot (21) sur l'un des deux éléments rigides à réunir.

4. Support antivibratoire hydraulique selon l'une quelconque des revendications précédentes, dans lequel la plaque ajourée (13) présente des pattes (14) qui sont serties sur le bord (9) de la platine au niveau des bords de fixation (15) de la base du corps en élastomère.

5. Support antivibratoire hydraulique selon la revendication 4, dans lequel la base (11) du corps en élastomère présente uniquement deux bords de fixation (15) séparés l'un de l'autre par uniquement deux bords libres (17).

6. Support antivibratoire hydraulique selon la revendication 5, dans lequel le capot (21) présente une forme générale en Ω ouvert selon un deuxième axe (Y) perpendiculaire audit premier axe, avec deux ailes de fixation (23) formant lesdites zones de fixation, et la première armature (2) se présente sous la forme d'un organe rigide allongé s'étendant longitudinalement selon ledit deuxième axe (Y) .

7. Support antivibratoire hydraulique selon l'une quelconque des revendications précédentes, dans lequel le corps en élastomère (10) comporte en outre une paroi mince (20) librement deformable qui délimite la deuxième chambre hydraulique (B) avec la face de support (12) de la platine, le canal étranglé (C) étant lui-même délimité entre la base (11) du corps en élastomère et ladite face de support de la platine.

## Patentansprüche

1. Hydraulisches schwingungsdämpfendes Lager, das dazu vorgesehen ist, zwischen zwei starren Elementen angeordnet zu werden, um Schwingungen zwischen diesen beiden Elementen im wesentlichen entlang einer ersten Achse (Z) zu dämpfen, wobei dieses Lager aufweist:
- eine erste und eine zweite starre Halterung (2, 4), die mit den beiden zu verbindenden starren Elementen fest verbunden werden können, wobei die zweite Halterung (4) aus einer Platte besteht, die sich im rechten Winkel zu der ersten Achse (Z) erstreckt und eine sogenannte Lagerfläche (12) aufweist, die der ersten Halterung zugewandt ist,
- einen Elastomerkörper (10), der die erste Halterung (2) mit der Platte (4) verbindet und der eine Basis (11) aufweist, die durch einfaches Festziehen parallel zur ersten Achse (Z) in dichten Kontakt mit der Lagerfläche (12) der Platte gebracht wird, wobei dieses axiale Festziehen mittels einer starren, durchbrochenen Platte (13) erfolgt, die in der Basis (11) des Elastomerkörpers versenkt ist und mit der Platte (4) durch Bördelverbindung fest verbunden ist, wobei die Basis (11) des Elastomerkörpers an ihrem Außenumfang einerseits mindestens zwei einander gegenüberliegende Ränder (15), genannt Befestigungsränder, aufweist, entlang derer diese Bördelverbindung hergestellt wird, und andererseits mindestens zwei freie Ränder (17) aufweist, die die Befestigungsränder (15) voneinander trennen, wobei die durchbrochene Platte (13) ihrerseits freie Ränder (16) aufweist, die in den freien Rändern (17) der Basis des Elastomerkörpers versenkt sind und sich einfach über die freien Ränder (17) an der Lagerfläche (12) der Platte in axialer Anlage befinden, wobei der Elastomerkörper ferner eine glockenförmige, dicke Wand (18) aufweist, die sich in der Richtung der ersten Achse (Z) erstreckt, indem sie sich von einer Spitze (19), die mit der ersten Halterung fest verbunden ist, bis zu der Basis (11) dieses Elastomerkörpers ausweitet, und die zusammen mit der Lagerfläche (12) der Platte mindestens eine erste, mit Flüssigkeit gefüllte Hydraulikkammer (A) umgrenzt,
- eine verformbare zweite Hydraulikkammer (B), die ebenfalls mit Flüssigkeit gefüllt ist,
- einen mit Flüssigkeit gefüllten engen Kanal (C), der die erste und die zweite Hydraulikkammer (A, B) miteinander verbindet, und
- eine starre Abdeckung (21), die wenigstens teilweise die dicke Wand (18) des Elastomerkörpers abdeckt, so dass die Ausschläge der ersten Halterung (2) gegenüber der Platte (4) begrenzt werden, wobei diese Abdeckung Befestigungsbereiche (23) aufweist, die parallel zur Platte (4) verlaufen und mit dieser Platte in der Nähe der freien Ränder (17) der Basis des Elastomerkörpers fest verbunden sind, wobei diese freien Ränder (16, 17) der durchbrochenen Platte und der Basis dieses Elastomerkörpers zwischen der Lagerfläche (12) der Platte und dieser Abdeckung (21) axial festgezogen werden,
**dadurch gekennzeichnet,**
**dass** die Befestigungsbereiche (23) der Abdeckung radial außerhalb der freien Ränder (16, 17) der durchbrochenen Platte und der Basis dieses Elastomerkörpers angeordnet sind, wobei diese Befestigungsbereiche sich in direktem Kontakt mit der Lagerfläche (12) der Platte befinden, und wobei sich diese Befestigungsbereiche zu dem Elastomerkörper (10) hin durch Anlagebereiche (26) verlängern, die sich parallel zur ersten Achse (Z) an die freien Ränder (16, 17) der durchbrochenen Platte und der Basis des Elastomerkörpers anlegen und damit diese freien Ränder an die Platte (4) pressen.

2. Hydraulisches schwingungsdämpfendes Lager nach Anspruch 1, bei dem die Befestigungsbereiche (23) der Abdeckung durch Bördeln fest mit der Platte (4) verbunden sind.

3. Hydraulisches schwingungsdämpfendes Lager nach Anspruch 1 oder 2, bei dem durch die Befestigungsbereiche (23) der Abdeckung und durch die Platte (4) Befestigungslöcher (7, 24) verlaufen, die im Anschluss aneinander angeordnet sind, um die Befestigung der Platte (4) und der Abdeckung (21) an einem der beiden zu verbindenden starren Elementen zu ermöglichen.

4. Hydraulisches schwingungsdämpfendes Lager nach einem der vorherigen Ansprüche, bei dem die durchbrochene Platte (13) Befestigungsstreifen (14) aufweist, die im Bereich der Befestigungsränder (15) der Basis des Elastomerkörpers um den Rand (9) der Platte gebördelt werden.

5. Hydraulisches schwingungsdämpfendes Lager nach Anspruch 4, bei dem die Basis (11) des Elastomerkörpers nur zwei Befestigungsränder (15) aufweist, die voneinander durch nur zwei freie Ränder (17) getrennt sind.

6. Hydraulisches schwingungsdämpfendes Lager nach Anspruch 5, bei dem die Abdeckung (21) eine allgemeine Ω-Form hat, die in der Richtung einer zweiten, im rechten Winkel zu der genannten ersten Achse verlaufenden Achse (Y) offen ist, wobei zwei Befestigungsflügel (23) die genannten Befestigungsbereiche bilden, und die erste Halterung (2) sich in Form eines länglichen, starren Organs präsentiert, das sich in Längsrichtung auf der genannten zweiten Achse (Y) erstreckt.

7. Hydraulisches schwingungsdämpfendes Lager nach einem der vorherigen Ansprüche, bei dem der Elastomerkörper (10) ferner eine dünne, frei verformbare Wand (20) aufweist, die die zweite Hydraulikkammer (B) mit der Lagerfläche (12) der Platte umgrenzt, wobei der enge Kanal (C) seinerseits zwischen der Basis (11) des Elastomerkörpers und der genannten Lagerfläche (12) der Platte eingegrenzt ist.

## Claims

1. A hydraulic antivibration support designed to be interposed between two rigid elements to damp vibration between said two elements essentially along a first axis (Z), said support comprising:
. first and second rigid strength members (2, 4) suitable respectively for being secured to the two rigid elements that are to be united, the second strength member (4) being constituted by a plate which extends perpendicularly to the first axis (Z) and which has a "support" face (12) facing towards the first strength member;
. an elastomer body (10) connecting the first strength member (2) to the plate (4) and having a base (11) pressed in sealing contact against the support face (12) of the plate merely by clamping parallel to the first axis (Z), said axial clamping being obtained by means of a rigid perforated insert (13) which is embedded in the base (11) of the elastomer body and which is secured to the plate (4) by crimping, the base (11) of the elastomer body having at its periphery firstly at least two opposite "fixing" edges (15) along which said crimping is performed, and secondly at least two free edges (17) interconnecting the fixing edges (15), the perforated insert (13) itself having free edges (16) which are embedded in the free edges (17) of the base of the elastomer body and which are merely pressed axially, through the free edges (17), against the support face (12) of the plate, the elastomer body further including a bell-shaped thick wall (18) extending along the first axis (Z), flaring from a top (19) secured to the first strength member to the base (11) of said elastomer body, and co-operating with the support face (12) of the plate to define at least a first hydraulic chamber (A) filled with liquid;
. a deformable second hydraulic chamber (B) which is likewise filled with liquid;
. a narrow channel (C) filled with liquid and interconnecting the first and second hydraulic chambers (A, B); and
. a rigid cover (21) covering the thick wall (18) of the elastomer body at least in part so as to limit displacement of the first strength member (2) relative to the plate (4), said cover having fixing zones (23) extending parallel to the plate (4) and secured to said plate in the vicinity of the free edges (17) of the base of the elastomer body, said free edges (16, 17) of the perforated insert and of the base of the elastomer body being clamped axially between the support face (12) of the plate and said cover (21);
the support **being characterized in that** the fixing zones (23) of the cover are disposed radially outside the free edges (16, 17) of the perforated insert and the base of the elastomer body, said fixing zones being in direct contact with the support face (12) of the plate, and said fixing zones extending towards the elastomer body (10) via bearing zones (26) which are pressed parallel to the first axis (Z) against the free edges (16, 17) of the perforated insert and of the base of the elastomer body, thereby pressing said free edges against the plate (4).

2. A hydraulic antivibration support according to claim 1, in which the fixing zones (23) of the cover are secured to the plate (4) by crimping.

3. A hydraulic antivibration support according to claim 1 or claim 2, in which the fixing zones (23) of the cover and of the plate (4) are pierced by fixing holes (7, 24) disposed in register with one another to enable the plate (4) and the cover (21) to be fixed to one of the two rigid elements to be united.

4. A hydraulic antivibration support according to any preceding claim, in which the perforated insert (13) has tabs (14) which are crimped to the rim (9) of the plate at the fixing edges (15) of the base of the elastomer body.

5. A hydraulic antivibration support according to claim 4, in which the base (11) of the elastomer body has merely two fixing edges (15) interconnected by merely two free edges (17).

6. A hydraulic antivibration support according to claim 5, in which the cover (21) is generally Ω-shaped and open along a second axis (Y) perpendicular to said first axis, with two fixing flanges (23) forming said fixing zones, and the first strength member (2) is in the form of an elongate rigid member extending longitudinally along said axis (Y).

7. A hydraulic antivibration support according to any preceding claim, in which the elastomer body (10) further includes a freely-deformable thin wall (20) which cooperates with the support face (12) of the plate to define the second hydraulic chamber (B), the narrow channel (C) itself being defined between the base (11) of the elastomer body and said support face of the plate.
